Europäisches Patentamt

European Patent Office

Office européen des brevets

(19)

(11) EP 0 466 857 B2

(12) **NEUE EUROPÄISCHE PATENTSCHRIFT**

(45) Veröffentlichungstag und Bekanntmachung des Hinweises auf die Entscheidung über den Einspruch:
**16.09.1998 Patentblatt 1998/38**

(45) Hinweis auf die Patenterteilung:
**21.06.1995 Patentblatt 1995/25**

(21) Anmeldenummer: **91902652.6**

(22) Anmeldetag: **30.01.1991**

(51) Int Cl.⁶: **G01G 11/08**

(86) Internationale Anmeldenummer:
**PCT/CH91/00025**

(87) Internationale Veröffentlichungsnummer:
**WO 91/11689 (08.08.1991 Gazette 1991/18)**

(54) **VORRICHTUNG, VERFAHREN UND ANWENDUNG DES VERFAHRENS ZUM ERFASSEN EINES PRODUKTIONSSTROMES**

DEVICE AND PROCESS FOR MONITORING MATERIAL FLOW, AND USE OF THE PROCESS

DISPOSITIF, PROCEDE ET MISE EN UVRE DU PROCEDE POUR LA DETECTION D'UN FLUX DE PRODUCTION

(84) Benannte Vertragsstaaten:
**AT BE CH DE DK ES FR GB IT LI LU NL SE**

(30) Priorität: **02.02.1990 CH 349/90**

(43) Veröffentlichungstag der Anmeldung:
**22.01.1992 Patentblatt 1992/04**

(73) Patentinhaber: **BUEHLER AG**
**9240 Uzwil (CH)**

(72) Erfinder:
- **GMÜR, Bruno**
  **CH-9014 St. Gallen (CH)**
- **NÄF, Peter**
  **CH-9410 Heiden (CH)**
- **WEIBEL, Roman**
  **CH-9242 Oberuzwil (CH)**

(74) Vertreter:
**von Samson-Himmelstjerna, Friedrich R., Dipl.-Phys. et al**
**SAMSON & PARTNER**
**Widenmayerstrasse 5**
**80538 München (DE)**

(56) Entgegenhaltungen:
**WO-A-86/05874          FR-A- 2 384 246**
**FR-A- 2 517 087**

- **WÄGEN UND DOSIEREN, Bd. 20, Nr. 6, November 1989, Mainz, DE, Seiten 241-245; Ralf M. Urban: "Gravimetrisch Dosieren - mit Bandwaage oder Differentialwaage"**
- **Datenblatt "Wäge- und Dosiertechnik", F9119, Carl Schenck AG, Darmstadt, September 1986**
- **Datenblatt "Wäge- und Dosiertechnik", F9122, Carl Schenck AG, Darmstadt, März 1986**
- **Kochsiek, "Handbuch des Wägens", Braunschweig/Wiesbaden, 1985, Seiten 334-337**
- **Handbuch der Carl Schenck AG, "Microcont FCO 452", Darmstadt, 1983, Seiten 1-22**

**Beschreibung**

Die Erfindung betrifft ein Verfahren zum Erfassen eines Produktstromes mit ungünstigem Fliessverhalten in einer Produktionsanlage, die Anwendung eines derartigen Verfahrens in einer Mühle und eine nach dem Differentialwaagenprinzip arbeitende Vorrichtung zur Durchführung des Verfahrens.

In Produktionsanlagen mit bereits hohem Automatisierungsgrad, zum Beispiel Mühlen wie auch Futtermühlen, ist in derjüngsten Zeit ein Zielkonflikt enstanden, indem eine kostengünstige Steigerung der Quantität mit den vorhandenen, messtechnischen Mitteln, entweder nicht, oder aber nur auf Kosten qualitativer Parameter möglich ist. Immer grössere installierte Durchsatzleistungen bei unverändert hohen Ansprüchen an die Qualität, besonders die Konstanz der Qualität, verlangen eine noch präzisere Steuerung und Kontrolle der Produktströme. Die Verarbeitungsmenge ebenso wie der jeweils momentane Durchsatz muss mit Waagengenauigkeit ständig erfasst werden.

Genaues Wägen bedeutet nun aber ein wiederholtes Waage-Füllen, Messen und Waage-Entleeren, sofern unter einer genauen Wägung das Verwiegen mittels von durch staatliche Fachleute geeichten Waagen verstanden wird und hat zur Folge, dass das Produkt intermittierend weitergegeben wird. Um diesen Nachteil zu beheben, müssen extra Zwischen-Ausgleichsbunker verwendet werden, was aber Zusatzaufwendungen erfordert.

Für eine mengenmässige, ununterbrochene Erfassung eines Produktstromes aus Materialien mit ungünstigen Fliesseigenschaften, wie zum Beispiel Mehl, Mehlmischungen, Schrot, Kleie, usw. und eine kontinuierliche Produktweitergabe werden zur Zeit fast ausschliesslich Bandwaagen verwendet. Bandwaagen haben den grossen Vorteil, dass die Problematik des Fliessverhaltens des Wägegutes nahezu ohne Einfluss ist. Das Gut wird kontinuierlich auf das Wägeband geleitet, verwogen und ebenso kontinuierlich wieder abgeworfen. In zwei Punkten ist diese Lösung aber nachteilig. Eine Bandwaage ist ungenauer als eine klassische Behälterwaage. Wenn die letztere ohne weiteres innerhalb einer Toleranz von +/- bis 2 ‰ arbeitet, liegt die Toleranz bei Bandwaagen von +/- 2‰ bis 1 %. Der weitere nachteilige Punkt liegt im Kostenaufwand für Bandwaagen und insbesondere im betrieblichen Aufwand für Unterhalt, Reinigung, Wartung, usw. Bandwaagen sind teuer, sodass diese sich nur in der Verarbeitung von Gütern mit sehr hohem Preis, wie chemische Stoffe, durchsetzen konnten. In Nahrungs- und Futtermittelwerken trifft man aus den genannten Gründen, aber auch weil Bandwaagen relativ grosse horizontale Abmessungen benötigen, nicht besonders viele Bandwaagen. Es sind in den vergangenen Jahren auch grosse Anstrengungen gemacht worden, um mit ganz anderen Messsystemen den Produktionsfluss zu überwachen, jedoch ohne grössere Erfolge.

Ein weiterer besonderer Problempunkt liegt in der Durchsatzleistung, die in Mühlenbetrieben heute regelmässig weit über eine Tonne pro Stunde liegt; übliche Werte sind 10...20...50 und mehr Tonnen pro Stunde für die jeweiligen zu messenden Produktionsströme.

Aus der FR-A-2 384 246 ist eine nach dem Differentialwaagenprinzip arbeitende Dosieranlage bekannt, die einen aufrechten Waagebehälter und eine drehzahlsteuerbare Austragschnecke mit im wesentlichen horizontal gerichteten Austrag aus dem Waagebehälter aufweist.

Die Erfindung befaßt sich mit der Aufgabe, ein Verfahren und eine Vorrichtung für die Messung auch von einem grossen Produktstrom sowie eine Anwendung des Verfahrens in einer Mühle zu entwickeln, welches den Durchsatz mit Waagengenauigkeit misst, eine völlig kontinuierliche Produktweitergabe wie bei Bandwaagen erlaubt und besonders für schwerfliessfähiges Gut störungsfrei und waagengenau arbeitet.

Vorstehende Aufgabe wird in verfahrensmäßiger Hinsicht durch den Gegenstand des Patentanspruches 1 gelöst.

Wesentlich und gleichzeitig unterschiedlich gegenüber einer normalen Differentialverwägung mit etwa 1-2% Nachfüllzeit ist die erfindungsgemäß erhöhte Nachfüllzeit, die sich aus dem Verhältnis von Wägeintervall zu Füllintervall ergibt. Erfindungsgemäß wird somit der Zulauf des Produktstromes zum Waagebehälter betont.

Wichtig für die genaue Erfassung des Produktstromes ist auch die Verwendung eines aufrechten Waagebehälters, von welchem das Produkt mit einer steuerbaren horizontalen Austragschnecke zwangsausgetragen wird. Das Gewicht des Produktes kann hierbei auf an sich bekannte Weise laufend durch Differentialverwiegung erfaßt werden. Der im wesentlichen horizontale Austrag beeinflußt die Gewichtsmessung nicht. Zur Errechnung der momentanen Austragsmenge pro Zeiteinheit und/oder eines totalisierten Durchsatzes des Produktstromes über eine wählbare Zeit, werden die Differential-Gewichtswerte während des Zulaufstops des Produktstromes zum Waagebehälter gemessen und dabei die entsprechenden Drehzahlen der Austragschnecke festgestellt.

Damit kann insgesamt mit dem Gedanken der Differentialverwiegung ein Produktstrom mit Waagegenauigkeit gemessen und mit einer drehzahlsteuerbaren Austragschnecke ständig kontrolliert werden. Auf diese Weise läßt sich eine kontinuierliche Weitergabe des Gutes garantieren.

Ueberraschenderweise ist es damit doch entgegen dem Vorurteil in der Fachwelt gelungen, den sehr wertvollen Gedanken der Differentialverwiegung aus der Dosiertechnik in die Produktionsüberwachung zu übertragen. Bisher wurde angenommen, dass Differentialmesssystem bei grossen Leistungen viel von ihrem Reiz verlören. Dafür wurden verschiedene Gründe genannt: Grosse Leistungen rufen nach umfangreichen Trichtern und Behältern, um die Nachfüllzeit zu reduzieren, in der jeder Dosierer volumetrisch zu arbeiten gezwungen ist. Mit der Nachfüllvorrichtung können dann auch Platzprobleme auftreten. Die Situation ist so, dass für Differential-Dosierer bei grosser Leistung der Raumbedarf viel eher kritisch wird als dies bei Banddosierern der Fall ist. Als allgemeine Regel kann angenommen werden, dass eine Differential-Dosierung nicht mehr als 1% der Betriebszeit volumetrisch arbeiten sollte, das heisst, dass die Nachfüll-Einrichtung bei grosser Leistung enorm dimensioniert werden müsste.

Ferner wurde letztlich doch an der Genauigkeit eines Differential-Dosierers gezweifelt, wenn der Durchsatz ein bis zwei Tonnen pro Stunde übersteigt.

Ein besonderer Vorteil der Erfindung liegt nun aber darin, dass in dem Waagebehälter, woraus stetig ausgetragen wird, das Produkt immer in Bewegung bleibt und dadurch die meisten schwerfliessfähigen Produkte, wie sie etwa in einem Mühlen betrieb für Nahrungs- oder Futtermittel anfallen, mit der neuen Lösung bezüglich des Durchsatzes erfasst werden können. In der Waage entsteht im normalen Betriebszustand kein Produktstillstand, sodass das Problem der Ueberwachung der ruhenden Reibung in die Bewegungsreibung innerhalb des Waagebehälters vermeidbar ist. Der Zulaufstop kann je nach Art der Anwendung durch Steuerung des Zulaufes erreicht oder durch Bildung eines kleinen Vordepots erzielt werden. Im Vordepot, das zum Beispiel über steuerbare Bodenklappen verschliessbar ist, wird eine kurzzeitige Aufstauung des Produktes von wenigen Sekunden in Kauf genommen. Da es sich jedoch beim Vordepot nicht um ein Wägeteil handelt, können hier ohne weiteres, wenn es erforderlich sein sollte, einfache mechanische Bewegungsmittel zur Unterstützung des Austrages verwendet werden, ohne die Messgenauigkeit zu stören, und doch ein Verstopfen an der Stelle zu verhindern.

Bevorzugte Weiterbildungen des erfindungsgemäßen Verfahrens sind Gegenstand der Ansprüche 2 bis 5.

Bevorzugt wird dabei eine sehr kurze, im Bereich von einigen bis 30 Sekunden liegende Zykluszeit gewählt und, weiter bevorzugt, die Auswertung über statistische Verfahren gerechnet, wodurch das Ergebnis noch genauer wird. Somit kann mit minimalen Zeitverzögerungen von Sekunden-Zeiträumen das Gut nach dem exakten Verwiegen kontinuierlich an die nächste Verarbeitungsstufe gegeben werden.

Der Durchsatz des Produktionsstromes kann aufgrund des kontinuierlichen volumetrischen Austrages aus dem Waagebehälter gemessen werden, mit einer zyklischen Korrektur des volumetrischen Wertes durch den Differential-Wägegewichtswert. Ganz besonders bevorzugt wird dabei das durch die Differentialverwiegung festgestellte Verhältnis von Durchsatz - Drehzahl einer Dosieraustragschnecke oder Schleuse festgestellt, gespeichert und zur späteren Vorgabe einer volumetrischen Dosierleistung für ein gleiches oder ähnliches Produkt vorgegeben.

Weist der Produktionsstrom grössere Schwankungen auf, die an sich nicht direkt beeinflussbar sind, oder ist der Produktionsstrom nur innerhalb grösserer Grenzwerte bekannt, so werden mit Vorteil über einen wählbaren ersten Zeitabschnitt ein oder mehrere Füllzyklen konstanter Zeitdauer vorgegeben, wobei die Differentialverwiegung mit konstanter Verzögerung beginnt und während des ersten Zeitabschnittes das Produkt mit vorgegebenen volumetrischen Sollwerten ausgetragen wird.

Vorteilhaft ist es, wenn aufgrund der Gewichtsdifferenzen am Beginn der jeweiligen Differentialverwiegung die Füllzyklus-Zeit für einen folgenden Zeitabschnitt verändert wird.

Die neue Erfindung erlaubt nun aber auch erstmalig im Falle eines aus dem Verarbeitungsprozess gegebenen, dauernd leicht schwankenden Produktstrom, diesen laufend waagegenau zu messen und andere Komponenten, zum Beispiel zu einem Hauptmehl, andere spezifische Mehl zur qualitativen Veränderung des Hauptmehles dem laufenden Produktionsstrom zuzumischen. Dies erfolgt dadurch, dass für die Mischung von zwei oder mehreren Produktströmen eine Meisterwaage bestimmt und jede weitere Differentialwaage im Takt mit der Meisterwaage mit vorgegebenen Drehzahlsollwerten beginnt und dann die Regelung der Dosierleistung jeder weiteren Differentialwaage entsprechend dem Ist-Wert der Wägemesswerte der Meisterwaage erfolgt.

Der anwendungsgemäße Aspekt der der Erfindung zugrundeliegende Aufgabe wird dadurch gelöst, daß das erfindungsgemäße Verfahren in einer Mühle bei der Steuerung und/oder Kontrolle der Mühleneingangsleistung, des Arbeitsprozesses vor dem Netzen, des Mahlprozesses und/oder der Mehlwaage undloder bei der Ermittlung der Ausbeute und Festlegung anderer Parameter durch Messung der Produktströme vor und nach der Vermahlung angewendet, also auch hier eine erfindungsgemäße, insbesondere zyklische, volumetrischgravimetrische Messung durchgeführt wird.

Vorrichtungsmäßig wird die der Erfindung zugrundliegende Aufgabe durch den Gegenstand des Anspruches 7 gelöst.

Bei der erfindungsgemäßen Vorrichtung wird - anders als beim Stand der Technik, aber ebenso wie beim erfindungsgemäßen Verfahren - der Produktzulauf betont.

Weitere bevorzugte Ausführungsformen sind Gegenstand der Ansprüche 8 bis 16.

Dabei bilden bevorzugt der aufrechte insbesondere rohrförmige Waagebehälter (Rohrwaage) eine horizontalen Austragschnecke und ein Ueberleitstück vom Waagebehälter zur Aushagsschnecke zusammen eine Art Kniestück. Durch das konsequentes Füllen des Waagebehälters entsteht ein natürlicher, konstanter Produktfluss, wobei der Waagebehälter wie ein ständig sich durch die Schwerkraft entleerender Stauraum arbeitet und nur die horizontale Austragung mechanisch zwangsweise erfolgt. Ganz besonders bevorzugt bilden dabei der aufrechte Waagebehälter, das Ueberleitstück, die auf die eine Seite austragende Austragschnecke sowie der auf die entgegengesetzte Seite austragende, steuerbare Antriebsmotor eine Verwiegeeinheit. Diese kann zum Beispiel an drei Biegestäben aufgehängt werden.

Bevorzugt wird das Ueberleitstück von dem Waagebehälter zu der Austragschnecke querschnittskonstant, zumindest angenähert querschnittskonstant, ausgebildet, wobei im Falle einer runden Querschnittsform des Waagebehälters das Ueberleitstück eine Form von rund zu rechteckig aufweist. Dadurch entsteht innerhalb der ganzen Waageneinheit ein positiver, gleichmässiger Produktfluss, der durch entsprechende Programmierung einer Waagensteuerung, bei steuerbarem Zulauf einen sehr hohen Grad an Konstanz aufweist. Bei nicht beeinflussbarem Zulauf kann der Produktaustrag sogar eine grössere Gleichmässigkeit als der Zulauf aufweisen, wenn die Schwankungen des Zulaufs nur ganz kurzfristig sind. Es wird auf diese Weise exakt gemessen; der Produktfluss bleibt konstant oder kann sogar noch beruhigt werden. Es ist ferner möglich, vor jedem Unterbruch oder für einen Produktwechsel das Wägesystem leerlaufen zu lassen. Weiterhin kann die ganze Verwiegeeinheit auf einer Plattformkonstruktion aufgehängt und/oder abgestützt werden. Bei ganz besonders hohen Ansprüchen an die Reinheit kann im unteren Bereich der Verwiegeeinheit eine Ausfahrschiene angeordnet werden, auf der die Austragschnecke mit dem Antriebsmotor für Reinigungszwecke horizontal ausfahrbar sind.

In allen Anwendungsfällen, in denen der Zulauf nicht abgeschaltet werden kann, wird vorgeschlagen, über der Rohrwaage einen Vor- oder Staubunker mit steuerbarer Bodenklappe anzuordnen. Der Vorbunker wird dabei bevorzugt 30% bis 90% der Rohrwaage fassen, wobei eine Zykluszeit im Bereich von einigen Sekunden bis dreissig Sekunden liegen kann.

In der Folge wird nun die Erfindung mit mehreren Ausführungsbeispielen mit weiteren Einzelheiten erläutert. Es zeigen

die Fig. 1    eine erfindungsgemässe Durchflussmessvorrichtung

die Fig. 2    die Messvorrichtung der Figur 1 während der Differentialverwiegungsphase

die Fig. 3    eine analoge Messvorrichtung während der volumetrischen Austragphase

die Fig. 4    ein Diagramm einer klassischen Differential-Dosierverwiegung

die Fig. 5    den Verlauf der Gewichtsanzeige in dem Waagebehälter über der Zeit nach der Erfindung

die Fig. 6    Anwendungen der neuen Erfindung in einem Mühlendiagramm

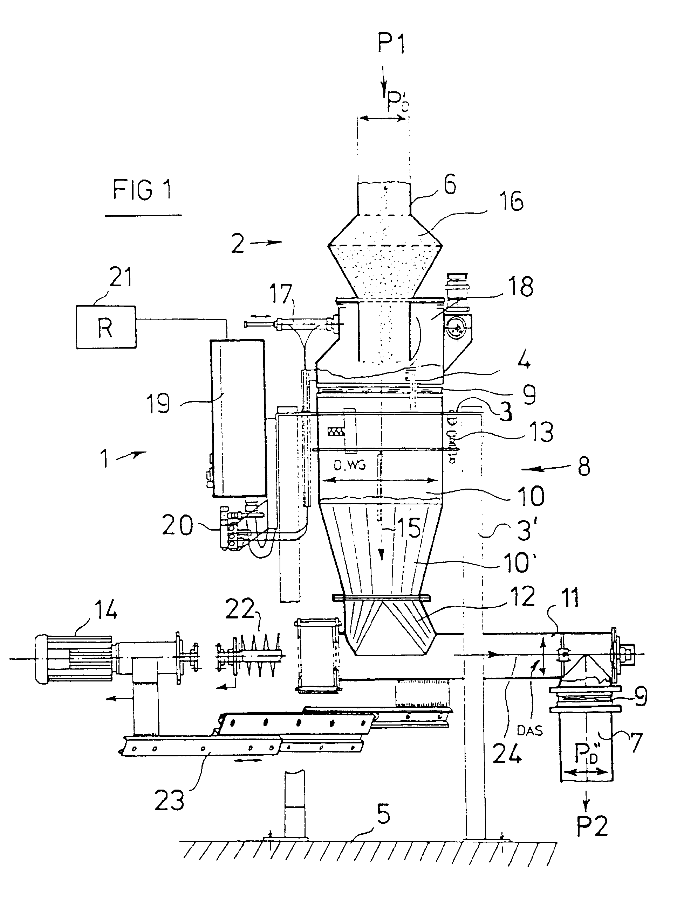

In der Folge wird nun auf die Figur 1 Bezug genommen. Der Produktstrom P1 tritt senkrecht in eine Durchflussmessvorrichtung 1 oben ein und verlässt diese unten wiederum als P2. Die Durchflussmessvorrichtung 1 weist einen Speisekopf 2 auf, der über Konsolen 4 mit einer Plattform 3 fest verbunden ist, die sich über Stützen 3' auf dem Boden 5 abstützt. Ein Produkt-Zulaufrohr 6 ebenso wie ein Produkt-Ableitungsrohr 7 sind ortsfest angeordnet. Ein Wageteil 8 ist gegenüber dem Speisekopf 2 sowie gegenüber dem Ableitungsrohr 7 je über eine flexible Gummimanschette 9 staubdicht verbunden. Das Wägeteil 8 besteht aus einem aufrechten Waagebehälter 10, welcher im unteren Teil eine leichte konische Verjüngung 10' aufweist. Der Waagebehälter 10 und dessen konische Verjüngung 10' sind als runde Rohrform gestaltet. Zwischen dem Waagebehälter 10 und einer Austragschnecke 11 ist ein Ueberleitstück 12 angeordnet, das den Uebergang von der aufrechten Rohrform des Waagebehälters 10 in eine horizontale Rohrform der Austragschnecke 11 produktflusstechnisch optimal sicherstellt. In der Figur 1 weist das Ueberleitstück 12 von oben nach unten einen etwa konstanten Querschnitt auf und hat bei dem Ausführungsbeispiel eine Form von rund zu rechteckig. Das Wägeteil 8 ist in Umfangsrichtung an zum Beispiel drei Gewichtsmesswertaufnehmern 13 an der Plattform 3 aufgehängt. Sehr interessant ist die Aufhängung des ganzen Wägeteiles 8 mit Einschluss eines Antriebsmotors 14, sodass der Antriebsmotor 14 und die Austragschnecke 11 in je eine entgegengesetzte Richtung über das Wägeteil 8 hinausragen und in einem gewissen Umfang bezüglich einer Mittelachse 15 einander das Gleichgewicht halten. Unmittelbar an das Zulaufrohr 6 befindet sich ein Vorbunker 16, der von einem Pneumatikzylinder 17 und einer Bodenklappe 18 über eine elektronische Steuerung 19 resp. eine pneumatische Signalumformung 20 nach wählbarem Programm steuerbar ist, wobei Sollwerte für die Produktaustragung von einem externen Rechner 21 und die Istwert-Gewichtssignale von dem Gewichtsmesswertaufnehmer 13 gewonnen werden.

Der Vorbunker 16 weist etwa 30% bis 90% des maximalen Fasungsvermögens des Waagebehälters 10 auf, bevorzugt weniger als 50%. Damit wird aber ganz bewusst von der konventionellen Anwendung einer Differentialwaage auch hier abgewichen, da für die Füllung des Waagebehälters nur ein Teil vorspeicherbar ist, damit der Zulauf wägetechnisch ebenfalls erfassbar ist, was für die Erfassung eines Produktstromes wichtig ist, wenn nicht zusätzliche Regelgeräte für den Zulauf noch in Kauf genommen werden.

Der Waagebehälter 10 weist etwa eine doppelte Höhe seines Durchmessers auf, wobei der Durchmesser 0,3 bis 0,6 m betragen kann. Die Rohrschnecke weist hierzu einen Durchmesser von 0,100 bis 0,250 m auf, sodass ein mittleres Verhältnis von Waagebehälterquerschnitt zu Rohrschneckenquerschnitt von etwa 1: 10 entsteht.

In der Figur 1 ist noch ein weiterer, besonders interessanter Ausgestaltungsgedanke dargestellt: der Antriebsmotor 14 ist mit oder ohne angeflanschter Austragschneckenwelle 22 über einen Auszug 23 schubladenartig in Richtung der Achse 24 der Austragschnecke 11 ausziehbar. Dies erlaubt ganz besonders hohe Ansprüche an die Reinhaltung des Produktweges des Produktstromes jederzeit in kürzester Zeit die Vorrichtung entsprechend zu warten.

In dem aufrechten Waagebehälter 10 senkt sich das Produkt stetig in senkrechter Richtung ab, wird mit dem Ueberleitteil 12 direkt in den Einzug der Austragschneckenwelle 22 geführt, horizontal von dem Waagebehälter 10 ausgetragen und wiederum senkrecht über das Ableitungsrohr 7 messtechnisch neu kontrolliert stetig abgegeben.

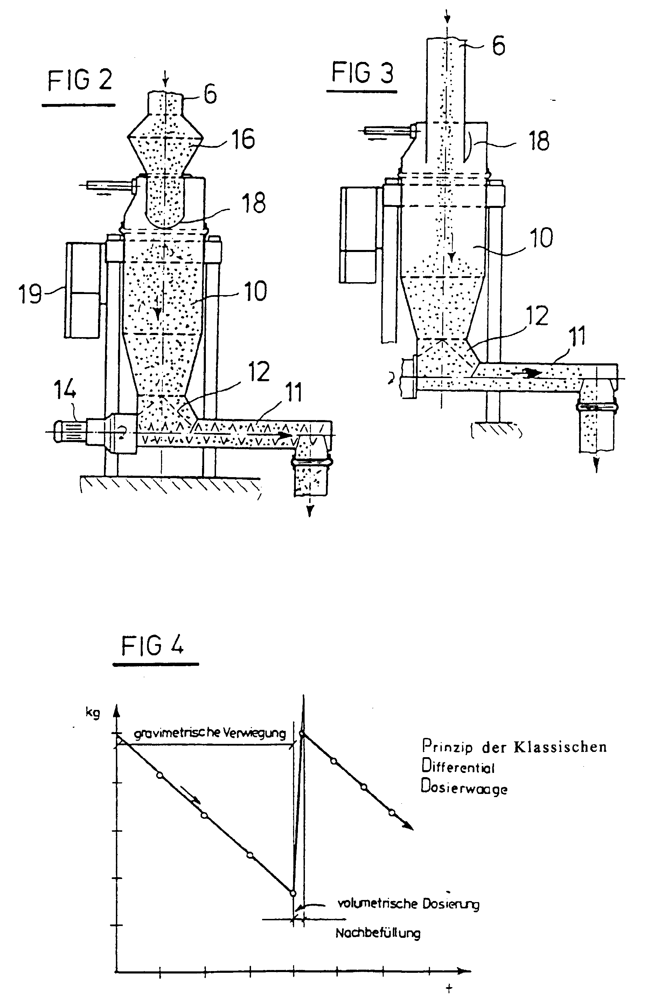

Die Figur 2 zeigt dieselbe Vorrichtung wie in der Figur 1 während der Phase der gravimetrischen Verwiegung mit geschlossener Bodenklappe 18 des Vorbunkers 16. Es findet hier während des Produktaustrages eine Differentialverwiegung statt, resp. das stetig ausgetragene Gut wird durch die entsprechende Reduzierung des Gewichtes in dem Waagebehälter 10 gemessen.

Die Figur 3 zeigt eine ähnliche Vorrichtung wie in Figur 2, jedoch ohne Vorbehälter. Es findet hier die Phase der volumetrischen Austragdosierung statt.

In der Figur 4 ist der an sich bekannte klassische Verlauf einer Differentialdosierwaage dargestellt. Dieser ist charakterisiert durch eine extrem kurze Füllzeit und eine sehr lange gravimetrische Verwiegung, was letztlich der Sinn einer Differential-Dosierung ist.

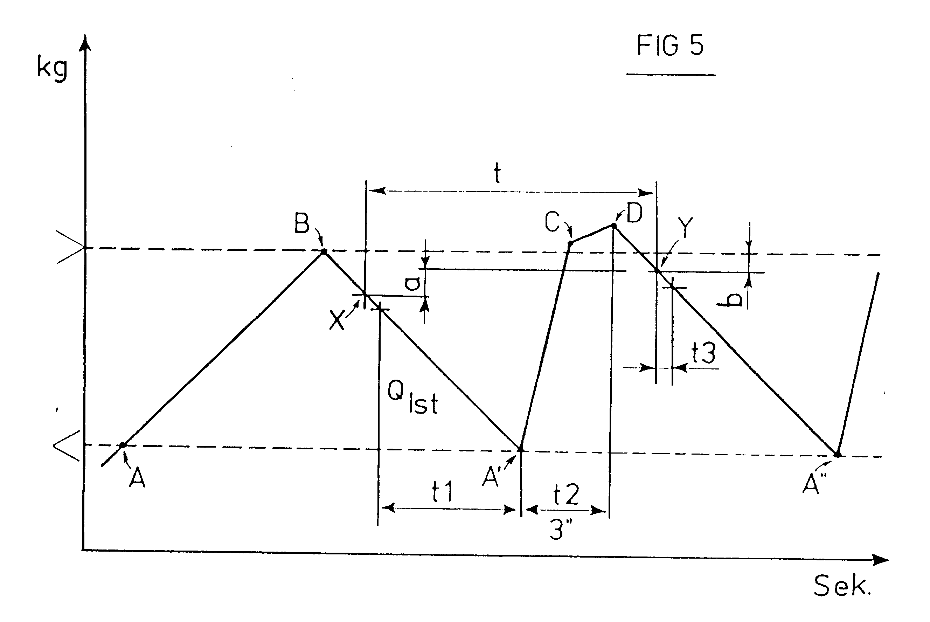

In der Folge wird nun auf die Figur 5 Bezug genommen, welche zwei Wägezyklen gemäss der neuen Erfindung darstellt. A ist der Beginn der Füllung einer Differentialwaage mit einem mehr oder weniger regelmässigen Produktzulauf. Bei B wird der Produktzulauf gestoppt und gleichzeitig beginnt der erste Produktaustrag aus der Waage mit der Differentialverwiegung, welche insbesondere darin besteht, dass an der durch den Zulauf nicht mehr gestörten Waage, das sich pro Zeiteinheit reduzierende Gewicht festgestellt wird. Punkt A' ist das Ende der Differentialverwiegung. Das unter dessen im Zulaufbereich von B bis A' gestaute Produkt wird in die Differentialwaage bis zum Punkt C abgelassen. Von C bis D erfolgt kurzzeitig noch ein regelmässiger Produktzulauf bis die Produktführung bei Punkt D wieder unterbrochen wird. Von D bis A' wird die zweite Differentialverwiegung vorgenommen.

Entscheidend für die Regelung der beiden Fälle

- Veränderung der Austragmenge aus der Differentialwaage bei nicht beeinflussbarer Zulaufmenge oder
- Veränderung der Zulaufmenge bei gewünschtem Austragsollwert ist, dass für wenigstens zwei Wägezyklen eine konstante Zeit (Zykluszeit) gewählt wird. Es ergibt sich daraus eine Differenz zwischen Zulaufwaage und Dosierleistung, welche beeinflusst werden soll.

Es bedeuten:

t1 : gravimetrische Verwiegezeit
t2 : Nachfüllzeit
t3 : Zeit für Regelung
t : Zykluszeit

Die Regelung kann dabei nach folgender Gesetzmässigkeit erfolgen:

$$Q_{soll} \text{ (kg/sec)} = Q_{ist} + \frac{Y - (a)}{t} + 0,5\frac{Y - > (b)}{t}$$

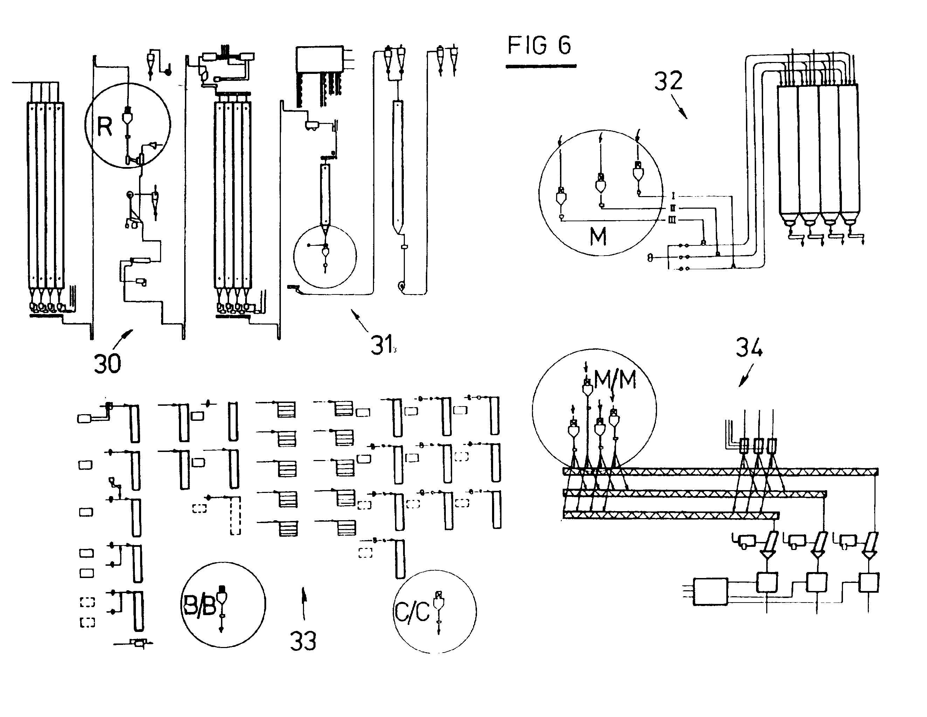

In der Figur 6 ist schematisch eine ganze Mühle dargestellt. Dabei handelt es sich um eine Mühlenreinigung 30, Abstehe- und Mahlvorbereitung 31 als linker oberer Block. Rechts oben ist ein Mehlsilo 32, links unten die Mühle 33 mit Plansichtern und Griessputzmaschinen und rechts unten eine Mehlmischerei 34 angedeutet. Die Anwendungsbereiche der neuen Erfindung sind in dem Diagramm jeweils mit einem Kreis markiert. In der Mühle ist mit B/B eine Kontrollpassage, zum Beispiel das Verhältnis Siebabstoss - Siebdurchfall nach B1 und mit C/C eine entsprechende Schlüsselpassage bei den Ausmahlpassagen für eine kontinuierliche Ueberwachung des Produktionsstromes vorgesehen.

**Patentansprüche**

1. Verfahren zum Erfassen eines Produktstromes (P1, P2) mit ungünstigem Fließverhalten in einer Produktionsanlage, z.B. einer Mühle, bei welchem

   a) der ankommende Produktstrom (P1) während intermittierender Füllintervalle (A'-D) in einen aufrechten Waagebehälter (C) geleitet,
   b) von dort kontinuierlich mittels einer drehzahlsteuerbaren Austragschnecke (11) im wesentlichen horizontal ausgetragen,
   c) dabei das Gewicht des ausgetragenen Produktstromes (P2) mittels einer elektronischen Differentialverwiegung während - zwischen den Füllintervallen (A'-D) liegender - Wägeintervalle (B-A', DA") gemessen und - zur Errechnung der momentanen Austragmenge pro Zeiteinheit und/oder eines totalisierten Produktstrom-Durchsatzes - mit den momentanen Drehzahlen der Austragschnecke (11) korreliert und
   d) ein Verhältnis von Wägeintervall (B-A', D-A") zu Füllintervall (A'-D) im Bereich von etwa 1 bis 6 gewählt wird,
   e) wobei der Produktaustrag durch Veränderung der Austragschnecken-Drehzahl derart gesteuert wird, daß
   f) das Gut durch Anpassung der Austragmenge aus dem Waagebehälter (10) an die Zulaufmenge ausgetragen wird.

2. Verfahren nach Anspruch 1, bei welchem für einen vollständigen Wägezyklus (Füllintervall plus Wägeintervall) eine kurze, im Bereich von einigen bis 30 Sekunden liegende Zykluszeit gewählt wird.

3. Verfahren nach einem der vorstehenden Ansprüche, bei welchem

    a) die Zulaufmenge des ankommenden Produktstromes (P1) vorgegeben ist,
    b) Füllintervalle (A'-D) konstanter Zeitdauer vorgegeben werden,
    c) laufend das Gewicht im Waagebehälter (10) erfaßt wird,
    d) während der Wägeintervalle (D-A', D-A") im Waagebehälter (10) Differential-Gewichtswerte gemessen werden.

4. Verfahren nach einem der vorstehenden Ansprüche, bei welchem das durch die Differentialverwiegung festgestellte Verhältnis von Durchsatz zu Drehzahl der Austragschnecke (11) gespeichert und zur späteren Vorgabe einer volumetrischen Dosierleistung für ein gleiches oder ähnliches Produkt vorgegeben wird, wobei die Differentialverwiegung jeweils nach einem konstanten Verzögerungsintervall beginnt, während dessen es mit vorgegebenen volumetrischen Sollwerten ausgetragen wird.

5. Verfahren nach einem der vorstehenden Ansprüche, bei welchem für die Mischung von zwei oder mehreren Produktströmen eine Meister-Differentialwaage bestimmt wird, jede weitere Differentialwaage im Takt der Meister-Differentialwaage mit vorgegebenen Drehzahlsollwerten beginnt und die Regelung der Dosierleistung jeder weiteren Differentialwaage entsprechend dem IST-Wägemesswert der Meister-Differentialwaage erfolgt.

6. Anwendung des Verfahrens nach einem der vorstehenden Ansprüche in einer Mühle bei der Steuerung und/oder Kontrolle der Mühleneingangsleistung (31), des Arbeitsprozesses vor dem Netzen (30), des Mahlprozesses (33) und/oder der Mehlwaage und/oder bei der Ermittlung der Ausbeute und Festlegung anderer Parameter durch Messung der Produktströme vor und nach der Vermahlung.

7. Nach dem Differentialwaagenprinzip arbeitende Vorrichtung zur Durchführung des Verfahrens nach einem der vorstehenden Ansprüche, mit

    a) einem aufrechten Waagebehälter (10),
    b) einem in den Waagebehälter (10) mündenden von diesem wägetechnisch getrennten Produktstrom-Zulaufrohr (6) mit steuerbarem Schließorgan (18) zum alternierenden Freigeben und Unterbrechen des Produktstromes (P1) in den Waagebehälter (10) und
    c) das Schließorgan (18) steuernden Steuermitteln (19), derart, daß das Verhältnis von Unterbrechungsdauer zur Freigabedauer des Zulaufstromes im Bereich von etwa 1 bis 6 liegt;
    d) wobei die Vorrichtung für eine derartige Steuerung des Produktaustrags ausgebildet ist, daß das Gut durch Anpassung der Austragmenge aus dem Waagebehälter (10) an die Zulaufmenge ausgetragen wird.

8. Vorrichtung nach Anspruch 7, in welcher ein Staubunker (16) im oder am Zulaufrohr (6) angeordnet und das Schließorgan (18) dem Staubunker zugeordnet ist.

9. Vorrichtung nach einem der Ansprüche 7 oder 8 mit einer mit dem unteren Teil des Waagebehälters (10) festverbundenen drehzahlsteuerbaren Austragschnecke (11) mit im wesentlichen horizontaler Austragsrichtung (24).

10. Vorrichtung nach Anspruch 9, mit einem im wesentlichen rohrförmigen Waagebehälter (10) und einem vom Waagebehälter (10) in die Austragschnecke (11) übergehenden Überleitstück (12), welches von einem runden zu einem rechteckigen Querschnitt übergeht und dabei etwa gleichgroße Querschnittsflächen hat.

11. Vorrichtung nach einem der Ansprüche 7 bis 9, in welcher der Waagebehälter (10), das Überleitstück (12) und die Austragschnecke (11) eine Knieform bilden und der Antriebsmotor (14) der Austragschnecke (11) - zur Bildung eines Gleichgewichtes - in der entgegengesetzten Richtung wie die Austragschnecke (11) austrägt.

12. Vorrichtung nach einem der Ansprüche 9 bis 11, in welcher die Austragschnecke (11) in Richtung ihrer Achse (24) herausziehbar angeordnet ist, insbesondere über einen schubladenartigen Auszug (23).

13. Vorrichtung nach einem der Ansprüche 9 bis 12, in welcher der Wägebehälter (10) und die Austragschnecke (11) samt Antriebsmotor (14) eine an Biegestäben (13) aufgehängte Waageeinheit bilden.

14. Vorrichtung nach einem der Ansprüche 8 bis 13, in welcher der Vorbunker (16) 30% bis 90% des Waagebehälters (10) faßt.

15. Vorrichtung nach einem der Ansprüche 8 bis 14, in welcher die freie Zuführleitung (6) zum Vorbunker (16) etwa querschnittsgleich wie die freie Abführleitung (7) von der Austragschnecke (11) ausgebildet ist.

16. Vorrichtung nach Anspruch 15, in welcher das Verhältnis des Förderquerschnittes der Austragschnecke (11) zum horizontalen Querschnitt des Waagebehältes (10) zwischen 1:8 bis 1:12, insbesondere etwa 1:10 beträgt.

**Claims**

1. Method for monitoring an unfavourable-flow-behaviour product flow (P1, P2) in a production plant, for example a mill, wherein

   a) the arriving product flow (P1) is conducted into an upright balance container (C) during intermittent filling intervals (A'-D),

   b) is continuously discharged therefrom substantially horizontally by means of a discharge worm (11) whose rotational speed is controllable,

   c) the weight of the discharged product flow (P2) is measured by means of electronic differential weighing during weighing intervals (B-A', D-A") - arranged between the filling intervals (A'-D) - and - for calculating the instantaneous discharge quantity per unit of time and/or a totalized product flow throughput - is correlated with the instantaneous rotational speeds of the discharge worm (11), and

   d) a ratio of weighing interval (B-A', D-A") to filling interval (A'-D) is chosen in the range of about 1 to 6,

   e) wherein the product discharge is so controlled by variation of the discharge worm rotational speed that

   f) the material is discharged by adaptation of the discharge quantity from the balance container (10) to the inflow quantity.

2. Method according to claim 1, wherein a short cycle time, in the range of a few seconds to 30 seconds, is chosen for a complete weighing cycle (filling interval plus weighing interval).

3. Method according to one of the preceding claims, wherein

   a) the inflow quantity of the arriving product flow (P1) is preset,

   b) filling intervals (A'-D) of constant time duration are preset,

   c) the weight in the balance container (10) is ascertained continuously,

   d) differential weight values are measured during the weighing intervals (D-A', D-A") in the balance container (10).

4. Method according to one of the preceding claims, wherein the ratio of the throughput to the rotational speed of the discharge worm (11), which ratio is determined by the differential weighing, is stored and is preset for a subsequent instruction for a volumetric dosaging output for an identical or similar product, the differential weighing in each case starting after a constant delay interval, during which it is discharged with preset volumetric desired values.

5. Method according to one of the preceding claims, wherein a master differential balance is allocated for the mixing of two or more product flows, each further differential balance begins in time with the master differential balance with preset rotational-speed desired values, and the control of the dosaging output of each further differential balance is effected in accordance with the actual weighing measurement value of the master differential balance.

6. Use of the method according to one of the preceding claims in a mill in the regulation and/or control of the mill input (31), the working process preceding wetting (30), the grinding process (33) and/or the flour balance and/or in ascertaining the yield and determining other parameters by measuring the product flows before and after grinding.

7. Apparatus operating on the differential balance principle, for carrying out the method according to one of the preceding claims, having

   a) an upright balance container (10),

   b) a product flow inflow tube (6) opening into the balance container (10) and separate therefrom for weighing technology purposes, with a controllable closure element (18) for alternately allowing and interrupting the product flow (P1) into the balance container (10), and

   c) control means (19) controlling the closure element (18) such that the ratio of the interruption duration to the inflow-allowing duration is in the range of about 1 to 6;

   d) wherein the apparatus is designed for controlling the product discharge such that the material is discharged by adaptation of the discharge quantity from the balance container (10) to the inflow quantity.

8. Apparatus according to claim 7, wherein a storage bin (16) is arranged in or on the inflow tube (6), and the closure element (18) is associated with the storage bin.

9. Apparatus according to one of claims 7 or 8, with a discharge worm (11) discharging in a substantially horizontal direction (24) and with its rotational speed controllable, and connected securely to the lower portion of the balance container (10).

10. Apparatus according to claim 9, with a substantially tubular balance container (10) and with a transfer part (12) which forms a transition from the balance container (10) into the discharge worm (11) and which merges from a round to a rectangular cross-section and at the same time has substantially equal-size cross-sectional areas.

11. Apparatus according to one of claims 7 to 9, wherein the balance container (10), the transfer part (12) and the discharge worm (11) constitute a knee or elbow shape, and the drive motor (14) of the discharge worm (11) - to establish an equilibrium - projects in the opposite direction to that of the discharge worm (11).

12. Apparatus according to one of claims 9 to 11, wherein the discharge worm (11) is arranged to be capable of being pulled out in the direction of its axis (24), more particularly by means of a drawer (23) as in a chest of drawers.

13. Apparatus according to one of claims 9 to 12, wherein the weighing container (10) and the discharge worm (11) together with the drive motor (14) form a weighing unit suspended on flexural bars (13).

14. Apparatus according to one of claims 8 to 13, wherein the preliminary bin (16) has 30% to 90% of the capacity of the balance container (10).

15. Apparatus according to one of claims 8 to 14, wherein the free infeed conduit (6) to the preliminary bin (16) has approximately the same cross-section as the free discharge conduit (7) from the discharge worm (11).

16. Apparatus according to claim 15, wherein the ratio of the conveying cross-section of the discharge worm (11) relative to the horizontal cross-section of the balance container (10) is between 1:8 to 1:12, more particularly approximately about 1:10.

**Revendications**

1. Procédé pour l'enregistrement d'un flux de produit (P1, P2) avec comportement d'écoulement défavorable dans une installation de production, un moulin par exemple, avec lequel

    a) le flux de produit (P1) arrivant est conduit pendant des intervalles de remplissage (A'-D) intermittents dans un récipient de pesée (10) vertical,
    b) de là est entraîné en continu dans une direction principalement horizontale au moyen d'une vis sans fin transporteuse (11) à vitesse réglable,
    c) le poids du flux de produit (P2) entraîné étant mesuré au moyen d'un pesage électronique différentiel pendant des intervalles de pesage (B-A', D-A") (se situant entre les intervalles de remplissage (A'-D) et étant en corrélation avec les vitesses instantanées de la vis sans fin (11) (pour le calcul de la quantité entraînée instantanée par unité de temps et/ou d'un débit cumulé de flux de produit) et
    d) un rapport entre l'intervalle de pesage (B-A', D-A") et l'intervalle de remplissage (A'-D) étant choisi dans la plage allant d'environ 1 à 6,
    e) l'entraînement du produit étant commandé par le changement de la vitesse de rotation de la vis sans fin de telle manière que
    f) la matière soit entraînée hors du récipient de pesée (10) par l'ajustement de la quantité entraînée à la quantité entrante.

2. Procédé selon la revendication 1, avec lequel on choisit un temps de cycle court allant de quelques secondes à 30 secondes pour un cycle de pesage complet (intervalle de remplissage plus intervalle de pesage).

3. Procédé selon l'une des revendications précédentes avec lequel

    a) la quantité entrante du flux de produit (P1) arrivant est préétablie,
    b) les intervalles de remplissage (A'-D) de durée constante sont préétablis,
    c) le poids dans le récipient de pesée (10) étant enregistré en permanence,
    d) les différences de poids sont mesurées pendant les intervalles de pesage (D-A', D-A") dans le récipient de pesée (10).

4. Procédé selon l'une des revendications précédentes, avec lequel le rapport établi par le pesage différentiel entre le débit et la vitesse de la vis sans fin (11) est mémorisé et préétabli pour la prédétermination ultérieure d'un débit de dosage volumétrique pour un produit identique ou similaire, le pesage différentiel commençant respectivement après un temps de retard constant, tandis que le produit est entraîné avec des valeurs de consigne volumétriques préétablies.

5. Procédé selon l'une des revendications précédentes, avec lequel on détermine une pesée différentielle principale pour le mélange de deux ou plusieurs flux de produits, chaque nouvelle pesée différentielle commençant dans le cycle de la pesée principale avec des valeurs de consigne préétablies pour la vitesse et le réglage du débit de chaque nouvelle pesée différentielle se faisant en fonction de la valeur mesurée réelle de la pesée principale.

6. Application du procédé selon l'une des revendications précédentes dans un moulin pour la commande et/ou le contrôle du débit d'entrée du moulin (31), du procédé de travail avant le mouillage (30), du procédé de broyage (33) et/ou de la pesée de la farine, et/ou pour le calcul du rendement et de la fixation d'autres paramètres par la mesure des flux de produit avant et après le broyage.

7. Dispositif fonctionnant selon le principe de la pesée différentielle pour l'application du procédé selon l'une des revendications précédentes, comportant

   a) un récipient de pesée (10) vertical,
   b) un tuyau d'arrivée (6) pour le flux de produit débouchant dans le récipient de pesée (10) et séparé de celui-ci au niveau de la pesée, équipé d'un organe de fermeture (18) contrôlable pour l'alternance entre la libération et l'interruption du flux de produit (P1) dans le récipient de pesée (10),
   c) des moyens de commande (19) contrôlant l'organe de fermeture (18) de façon que le rapport entre la durée d'interruption et la durée de libération du flux d'arrivée se situe entre 1 et 6, et
   d) le dispositif étant agencé pour commander l'entraînement du produit de telle sorte que la matière soit entraînée hors du récipient de pesée (10) par ajustement de la quantité entraînée à la quantité entrante.

8. Dispositif selon la revendication 7. dans lequel une trémie de retenue (16) est disposée dans ou sur le tuyau d'arrivée (6) et l'organe de fermeture (18) est affecté à la trémie de retenue.

9. Dispositif selon l'une des revendications 7 ou 8 équipé d'une vis sans fin (11) à vitesse réglable et reliée de façon fixe à la partie inférieure du récipient de pesée (10), avec un sens d'entraînement (24) principalement horizontal pour le produit.

10. Dispositif selon la revendication 9, comportant un récipient de pesée (10) principalement tubulaire et une pièce de transition (12) allant du récipient de pesée (10) à la vis sans fin (11), laquelle passe d'une section circulaire à une section rectangulaire en ayant des surfaces de section à peu près identiques.

11. Dispositif selon l'une des revendications 7 à 9, dans lequel le récipient de pesée (10), la pièce de transition (12) et la vis sans fin d'entraînement (11) constituent un coude et le moteur d'entraînement (14) de la vis sans fin (11) entraîne le produit dans la direction opposée à celle de la vis sans fin (11) pour constituer un équilibre.

12. Dispositif selon l'une des revendications 9 à 11, dans lequel la vis sans fin (11) est disposée de façon amovible dans le sens de son axe (24), notamment au moyen d'un système extractible (23) en forme de tiroir.

13. Dispositif selon l'une des revendications 9 à 12, dans lequel le récipient de pesée (10) et la vis sans fin d'entraînement (11) avec le moteur de commande (14) constituent une unité de pesage accrochée à des barres de flexion (13).

14. Dispositif selon l'une des revendications 8 à 13, dans lequel la pré-trémie (16) a une capacité représentant environ 30 % à 90 % celle du récipient de pesée (10).

15. Dispositif selon l'une des revendications 8 à 14, dans lequel la conduite libre d'arrivée (6) allant à la pré-trémie (16) est conçue avec à peu près la même section que la conduite libre d'évacuation (7) venant de la vis sans fin (11).

16. Dispositif selon la revendication 15, dans lequel le rapport entre la section de transport de la vis sans fin (11) et la section horizontale du récipient de pesée (10) compris entre 1/8 et 1/12, est d'environ 1/10 en particulier.

FIG 1

FIG 2

FIG 3

FIG 4

kg

gravimetrische Verwiegung

Prinzip der Klassischen
Differential
Dosierwaage

volumetrische Dosierung

Nachbefüllung

t

FIG 5

FIG 6